# EUROPEAN PATENT APPLICATION

(11) **EP 1 654 925 A2**
(43) Date of publication of application: **10.05.2006**
(21) Application number: 05077093.2
(22) Date of filing: 13.09.2005
(51) Int. Cl.: A01G 13/02

(54) **Tunnel end**

(30) Priority: 16.09.2004 GB 0420585
(71) Applicant: Cardozo, Damian, Wiltshire BA12 6LH (GB)
(72) Inventor: The designation of the inventor has not yet been filed

(57) **Abstract**

A tunnel cloche end section includes a length of fabric (2) attached to the end of a tunnel cloche (1), which can be bunched together at its end by means of a drawstring, and secured in position by means of a clamping device such as a toggle.

## Description

This invention relates to a system for closing the ends of a tunnel cloche.

There exist various different systems for closing the ends of tunnel cloches, some of which allow for partial ventilation, and some of which are separate removable sections.
The present invention proposes an end section which can be manufactured as part of the tunnel, is non-removable, and which can be adjusted to allow the end of the tunnel to be fully open, partially open, or fully closed, by means of a drawstring threaded through a section of fabric, which extends from the end of the tunnel. The drawstring and fabric are held in the position they are set by a clamping device such as a toggle.

The invention will now be described solely by way of example and with reference to the accompanying drawings in which:

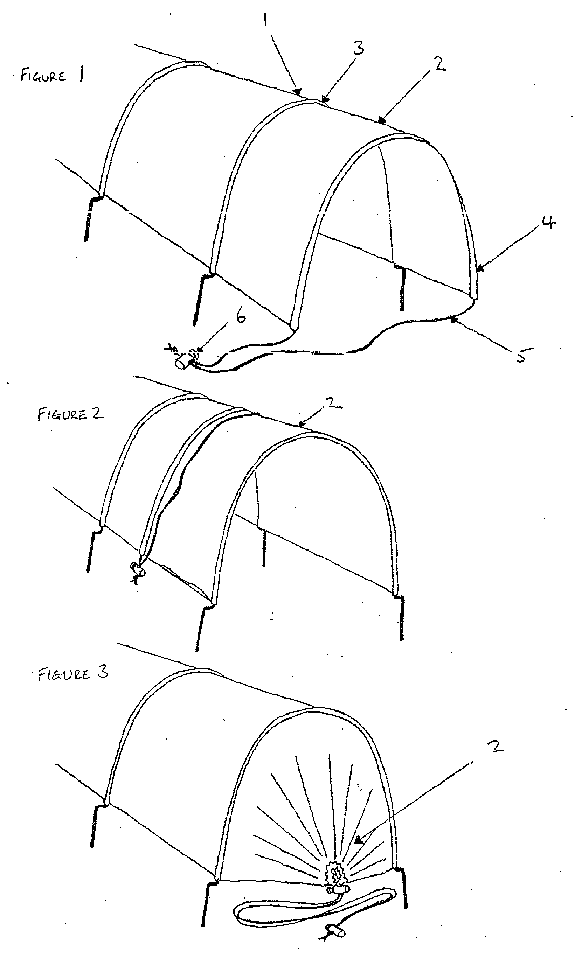

Fig 1 shows the end of a tunnel cloche 1 where the covering fabric 2 (usually polyethylene, non-woven polypropylene or netting) extends outwards from the end structural arch of the tunnel 3. A pocket 4 is formed in the fabric by stitching the fabric to itself, or by some other method of joining the fabric to itself. A cord 5 'drawstring' is threaded through this pocket. The ends of the drawstring are tied together to form a loop, and a toggle 6 is fitted.
Fig 2 shows the extending section of fabric 2 folded back over the arch of the tunnel thereby leaving the entire end of the tunnel open. The length of cord is long enough to allow the fabric to achieve this position.
Fig 3 shows the fabric 2 bunched together, the drawstring having been pulled tightly through the pocket in the fabric, thereby completely closing the end of the tunnel. The toggle assists in the process of pulling the drawstring tight, and clamps the drawstring and therefore the fabric in the position to which it has been set.

## Claims

1. A tunnel cloche end section comprising a length of fabric attached to the end of a tunnel cloche, with a drawstring threaded through either a pocket in the fabric, or a series of holes in the fabric or a series of loops attached to the fabric, which when pulled tight, force the fabric to bunch together, thereby closing the end of the tunnel.

2. A tunnel cloche end section according to claim 1 in which the drawstring is clamped to itself by means of a toggle or other fastening or clamping device, so that the fabric is held in the position to which it is set. ie. bunched together.

3. A tunnel cloche end section according to claim 1 in which the drawstring is of sufficient length that with its ends tied together, it will allow the length of fabric to be folded back over the tunnel, without affecting the shape of the tunnel, thereby completely opening the end of the tunnel.

4. A tunnel cloche end section according to any or all of claims 1, 2 and 3.
